# EUROPÄISCHE PATENTSCHRIFT

(11) **EP 0 966 653 B1**
(45) Veröffentlichungstag und Bekanntmachung des Hinweises auf die Patenterteilung: **14.05.2003**
(21) Anmeldenummer: 98914879.6
(22) Anmeldetag: 12.03.1998
(51) Int. Cl.: G01D 5/12, G01B 7/02, F15B 15/28

(54) **VERFAHREN UND VORRICHTUNG ZUR POSITIONSERFASSUNG EINES BEWEGLICH ANGEORDNETEN STELLGLIEDS EINES STELLANTRIEBS**
METHOD AND APPARATUS FOR DETECTING THE POSITION OF A MOVEABLE ACTUATOR OF A SERVO-DRIVE
DISPOSITIF ET APPAREIL PERMETTANT DE DETECTER LA POSITION D'UN ORGANE DE REGLAGE MOBILE D'UN VERIN

(30) Priorität: 12.03.1997 DE 19710136; 21.03.1997 DE 19711781; 07.03.1998 DE 9801339 U
(43) Veröffentlichungstag der Anmeldung: 29.12.1999
(73) Patentinhaber: Pepperl + Fuchs Gmbh, 68307 Mannheim (DE)
(72) Erfinder: SCHAEUBLE, Caroline, D-68309 Mannheim (DE); SEEFRIED, Roland, D-69121 Heidelberg (DE); SCHNEIDER, Thomas, D-67281 Kirchheim (DE)
(74) Vertreter: Mierswa, Klaus, Dipl.-Ing.
(86) Internationale Anmeldenummer: EP9801410
(87) Internationale Veröffentlichungsnummer: WO98040699

(56) Entgegenhaltungen:
- EP-B- 0 457 762
- DE-A- 3 738 151

## Beschreibung

### Technisches Gebiet:

Die Erfindung betrifft ein Verfahren zur Positionserfassung eines beweglich angeordneten Stellglieds eines Stellantriebs hinter einer aus ferromagnetischem Material bestehenden Gehäusewand, wobei das Stellglied einen Magneten trägt, der ein magnetisches Feld durch die Gehäusewand erzeugt und vor der Gehäusewand ein Magnetfeldsensor positioniert ist, gemäß dem Oberbegriff des Anspruchs 1 sowie einen Zylinder gemäß dem Oberbegriff von Anspruch 2.

### Stand der Technik:

Magnetische Sensoren dienen zur berührungslosen Erfassung bzw. Messung mechanische Größen wie Position, Weg, Abstand, Drehzahl oder Drehwinkel. Bei vielen Anwendungen wird der Sensor durch einen Dauermagneten angesteuert und setzt dann die Position dieses Magneten relativ zum Sensorelement in ein elektrisches Signal um. Als Sensoren werden Magnetfeldsensoren, zum Beispiel Sättigungskernsonden, GMR, magnetoresistive Sensoren oder Hallelemente verwendet, die sowohl für die Ansteuerung mit Dauermagneten als auch für die Erfassung von Eisenteilen geeignet sind. Wirksam für die Ansteuerung des Positionssensors ist nur die Magnetfeldkomponente parallel zur Sensorachse.

Durch die EP 0 457 762 A ist ein Stellantrieb mit einem hinter einer Gehäusewand bewegbaren Stellglied bekannt geworden, bestehend aus einem Zylinder mit Kolbenstange und Kolben, an welchem eine Einrichtung zum Erzeugen eines magnetischen Feldes angebracht ist, und vor der Gehäusewand des Stellantriebes sich ein Magnetfeldsensor befindet. Die Gehäusewand ist aus einem magnetisch leitenden Material hergestellt, wobei die Feldlinien des magnetischen Feldes in der Gehäusewand einen zur Vorderseite der Gehäusewand abgeschirmten Hauptfluß bilden. Zur Erzeugung eines magnetischen Nebenflusses an der Vorderseite der Gehäusewand ist ein zwei Enden aufweisender magnetischer Leiter angeordnet, dessen erstes Ende der Gehäusewand benachbart ist und dessen zweites Ende einen Luftspalt begrenzt, in welchem der Magnetfeldsensor angebracht ist. Gleichermaßen können auch zwei magnetische Leiter vorgesehen sein, deren zweite Enden unter Bildung des Luftspaltes einander gegenüberliegend angeordnet sind. Der Stellantrieb ist als hydraulischer Hochdruckzylinder mit einem mit einer Kolbenstange verbundenen Kolben als Stellglied ausgestaltet, wobei die Zylinderwand die Gehäusewand bildet und die Einrichtung zur Erzeugung des magnetischen Feldes als Dauermagnet ausgebildet ist. Ebenso wurde in dieser Literaturstelle schon vorgeschlagen, daß es denkbar wäre, eine Hallsonde unmittelbar auf der Außenseite der Zylinderwand anzuordnen und dann nur einen magnetischen Leiter vorzusehen, dessen zweites Ende die Rückseite der Hallsonde abdeckt, wobei ein Luftspalt zur Zylinderwand vorgesehen bleibt.

### Technische Aufgabe:

Der Erfindung liegt die Aufgabe zugrunde, ein Verfahren anzugeben, mit welchem ein Stellantrieb so verbessert werden kann, daß derselbe auch bei einer magnetisch abschirmenden Gehäusewand die Stellung des Stellgliedes auf einfache Weise mit einfachen Mitteln sicher zu erfassen imstande ist, wie auch ein verbesserter Zylinder mit Kolbenstange und Kolben als Stellantrieb angegeben werden soll.

### Offenbarung der Erfindung und deren Vorteile:

Die Lösung der Aufgabe besteht erfindungsgemäß darin, daß das Stellglied mitsamt dem Magneten relativ zur Gehäusewand bewegt wird, wodurch die Feldlinien des magnetischen Feldes einen innerhalb der Gehäusewand verlaufenden fortschreitenden Hauptfluß mit magnetischer Remanenz aufbauen, die einen Streufluß zur Vorderseite der Gehäusewand aufbaut, wobei der Streufluß außerhalb der Gehäusewand entgegengesetzt wie der Hauptfluß gerichtet ist und der Magnetfeldsensor die Feldrichtung des Streuflusses erfaßt und bei Vorbeifahrt des Stellglieds mit dem Magneten das Streufeld durch das magnetische Feld des Magneten überlagert wird und der Magnetfeldsensor die Änderung der Polarität des magnetischen Feldes registriert und aus dem Signal des Magnetfeldsensors in einer nachgeschalteten Auswerteelektronik ein Schaltsignal abgeleitet wird.

Eine Vorrichtung zur Durchführung des Verfahrens ist durch einen Zylinder mit einer ferromagnetischen Gehäusewand und mit einem mit einer Kolbenstange verbundenen, als Stellglied wirkenden, beweglich angeordneten Kolben zur Positionserfassung des Stellglieds gekennzeichnet, wobei an dem Kolben oder der Kolbenstange ein Magnet angeordnet ist, welcher mit einem Polring in Verbindung steht, welcher der Gehäusewand gegenüberstehende Stirnflächen aufweist, wobei der Magnet ein magnetisches Feld erzeugt, welches durch die Stirnflächen des Polrings in die Gehäusewand eingeleitet wird und durch diese hindurch wirkt, vor welcher ein Magnetfeldsensor auf die Gehäusewand aufgebracht ist, mit einer dem Magnetfeldsensor nachgeschalteten Auswerteelektronik, wobei der Magnetfeldsensor ein Magnetfeldsensorelement ist und im Verwendungsfall bei Bewegung des Stellglieds mitsamt dem Magnet relativ zur Gehäusewand die Feldlinien des magnetischen Feldes einen innerhalb der Gehäusewand verlaufenden fortschreitenden Hauptfluß aufbauen, der in der Gehäusewand eine magnetische Remanenz ausbildet, die nach Vorbeifahrt des Magneten erhalten bleibt und die entlang der Bewegungsachse des Magneten entsprechend der Polung gerichtet ist und einen Streufluss zur Vorderseite der Gehäusewand nach außerhalb derselben aufbaut, in dessen Bereich das Magnetfeldsensorelement angeordnet ist, wobei der Streufluss außerhalb der Gehäusewand in entgegengesetzter Richtung wie der Hauptfluss gerichtet ist, und das Magnetfeldsensorelement die Feldrichtung des Streuflusses erfaßt und bei Vorbeifahrt des Magneten das Streufeld durch das magnetische Feld des Magneten überlagert wird und das Magnetfeldsensorelement die Änderung der Polarität des magnetischen Feldes zu registrieren imstande ist und aus dem Signal des Magnetfeldsensorelements in der Auswerteelektronik ein Schaltsignal ableitbar ist.

In vorteilhafter Ausgestaltung ist das Magnetfeldsensorelement ein magnetoresistiver Sensor und/oder eine Sättigungskernsonde und/oder ein Hallelement und/oder ein Giant Magneto Resistiv Sensor (GMR). Gleichermaßen kann das Magnetfeldsensorelement innerhalb eines Gehäuses angeordnet sein, welches seinerseits auf die Gehäusewand, vorzugsweise direkt, aufgebracht ist; das Material des Gehäuses ist dergestalt beschaffen, daß es die das Gehäuse durchsetzenden magnetischen Feldlinien praktisch nicht beeinflußt.

Das Magnetfeldsensorelement ist in der Lage, das schwache, aus der Gehäusewand austretende Streufeld ausreichend zu erfassen. Natürlich kann mit einer derartigen Anordnung auch das magnetische Feld eines Dauermagneten erfaßt werden. Eine Sättigungskernsonde besteht aus einer langen Spule, mit einem Kern aus hochpermeablen Material, zum Beispiel amorphen Metall; bei magnetischer Sättigung des Kerns verringert sich die Impedanz der Spule. Ein magnetoresistives Element ist ein Bauteil, welches aus einem magnetisch leitfähigen Material (Permalloystreifen) besteht, dessen Widerstand sich unter dem Einfluß eines äußeren Magnetfeldes verändert. GMR-Sensorelemente sind eine Weiterentwicklung des magnetoresistiven Sensorelements.

Die Gehäusewand ist die Zylinderwand eines Zylinders und das Stellglied ein mit einer Kolbenstange verbundener Kolben, an dem oder der Kolbenstange die Einrichtung zum Erzeugen des magnetischen Feldes angeordnet ist, die ein Dauermagnet ist, der mit einem oder mehreren Polringen in Verbindung steht, die der Zylinderwand gegenüberstehende Stirnflächen aufweisen zum Einleiten des magnetischen Feldes in die Zylinderwand.

Der oder die Polringe bestehen aus ferromagnetischem Material, wobei der Dauermagnet ein Magnetring sein kann oder aus einer Mehrzahl von Magneten bestehen kann, der oder die in einem Aufnahmering aus einem nichtmagnetisierbaren Material angeordnet ist bzw. sind, wobei der Aufnahmering am Kolben befestigt ist. Jedem Sensorelement ist eine entsprechende Auswerteelektronik nachgeschaltet zur Aufbereitung des Sensorsignals und zum Anschluß des Magnetfeldsensors an eine SPS oder ein anderes Nachschaltgerät. Zur besseren Auswertung des Streuflusses kann der Magnetfeldsensor in einer Vertiefung der Gehäusewand des Stellantriebes angeordnet sein.

Des Weiteren besteht der Polring aus weichmagnetischem Stahl und weist mehrere Dauermagnete, zum Beispiel in zylindrischer Bauform, in einem Aufnahmering aus nichtmagnetisierbarem Material auf. Der Kolben und/ oder die Kolbenstange des Stellantriebs können aus magnetisierbarem oder nichtmagnetisierbarem Material, zum Beispiel Messing, bestehen. Der Magnetfeldsensor kann aus mehreren räumlich unterschiedlich angeordneten Magnetfeldsensorelementen bestehen zur differentiellen Auswertung der magnetischen Flußdichteänderung und zur Erzeugung eines Differenzsignals. Am Kolben oder der Kolbenstange sind Polschuhe aus weichmagnetischem oder ferromagnetischem Material angeordnet, zwischen denen wenigstens ein Magnet gehaltert ist. Ebenso laufen die Polschuhe ringförmig um, wie eine Mehrzahl von Magneten zwischen diesen Polringen in einer Querschnittsebene des Zylinders angeordnet ist. Die Magnete können in einem Aufnahmering aus nichtmagnetisierbarem Material angeordnet sein und vorzugsweise äquidistante Abstände voneinander haben, wobei der Aufnahmering zwischen den ferromagnetischen Polringen dergestalt angeordnet ist, daß die Nord- bzw. Südpole der Magnete den Polringen direkt gegenüberstehen oder diese berühren.

Ein wesentlicher Vorteil der Erfindung besteht darin, daß im Unterschied zu dem bisher aufgebauten Prinzip der EP 0 457 762 A (Hallelement mit Flussleitblechen) durch die spezifische Anordnung des Sensorelements und die Verbesserung der Elektronik auf die Flußleitbleche ganz verzichtet werden kann, da der magnetische Fluß direkt das Sensorelement durchsetzt, dessen Ausgangssignal in ein entsprechendes Schaltsignal umgewandelt wird.

Die Erfindung beruht auf der physikalischen Grundlage, daß die Gehäusewand des Stellantriebs bzw. die Zylinderwand aus einem ferromagnetischen Material bestehen muß, wobei am Stellglied ein Magnetsystem befestigt sein muß, welches ein ausreichendes Magnetfeld erzeugt. Mit der Vorbeifahrt des Magneten bzw. des Magnetsystems des Stellgliedes am Magnetfeldsensorelement findet eine Ausrichtung der magnetischen erregbaren Elementarmagnete statt, die als Remanenz innerhalb der Gehäusewand entsprechend dem Werkstoff derselben erhalten bleibt. Dabei werden die bisher ungeordneten Elementarmagnete in einen geordneten Zustand versetzt, was das Remanenzfeld ausbildet. Dieses erzeugt ein mehr oder weniger schwaches Streufeld, welches aus der Oberfläche der Gehäusewand austritt, dessen Feldlinien entgegengesetzt der Richtung des Remanenzfeldes innerhalb der Gehäusewand verlaufen. Der verbleibende Restmagnetismus innerhalb der Gehäusewand ist entsprechend der Polung des Magnetsystems des Stellgliedes gerichtet.

Der außen auf die Gehäusewand aufgesetzte Magnetfeldsensor greift den magnetischen Streufluß entlang der Gehäusewand ab. Dabei erfaßt der Magnetfeldsensor entweder nur das Feld der Remanenz oder sogar die Polarität, also die Feldrichtung der Remanenz.

Nähert sich das Stellglied dem Magnetfeldsensor, dann erzeugt das starke Feld des Magnetsystems an der Außenwand der Gehäusewand ein Streufeld, das dem Feld des Remanenzfeld überlagert wird; der Magnetfeldsensor registriert diese Änderung des magnetischen Feldes.

Kurzbeschreibung der Zeichnung, in der zeigen:
- Figur 1: einen Ausschnitt aus einer Zylinderwand mit Kolbenstange und Kolben, der zum Erzeugen des magnetischen Feldes einen Dauermagneten aufweist
- Figur 2: in schematischer Darstellung das Remanzfeld innerhalb der Zylinderwand zusammen mit dem sich daraus ergebenden Streufeld sowie einen Magnetfeldsensor, der direkt auf die Zylinderwand aufgesetzt ist
- Figur 3: das sich innerhalb der Zylinderwand ausbildende und ändernde Magnetfeld beim erneuten Überfahren durch den Dauermagneten des Stellgliedes
- Figur 4: eine schaubildliche Darstellung des Verlaufs der magnetischen Flußdichte an der Zylinderwand
- Figur 5: eine Mehrzahl von Magnetfeldsensoren, die zur Differenzmessung räumlich getrennt voneinander angeordnet sind
- Figur 6: eine Draufsicht auf einen Aufnahmering mit einer Mehrzahl von in äquidistanten Abständen angeordneten Magneten und
- Figur 7: einen Ausschnitt aus einer Zylinderwand mit einem Kolben aus nichtmagnetisierbarem Material sowie einer Schubstange, wobei an dem Kolben Polringe angeordnet sind, zwischen denen wenigstens einen Magnet gehaltert ist.

### Wege zur Ausführung der Erfindung:

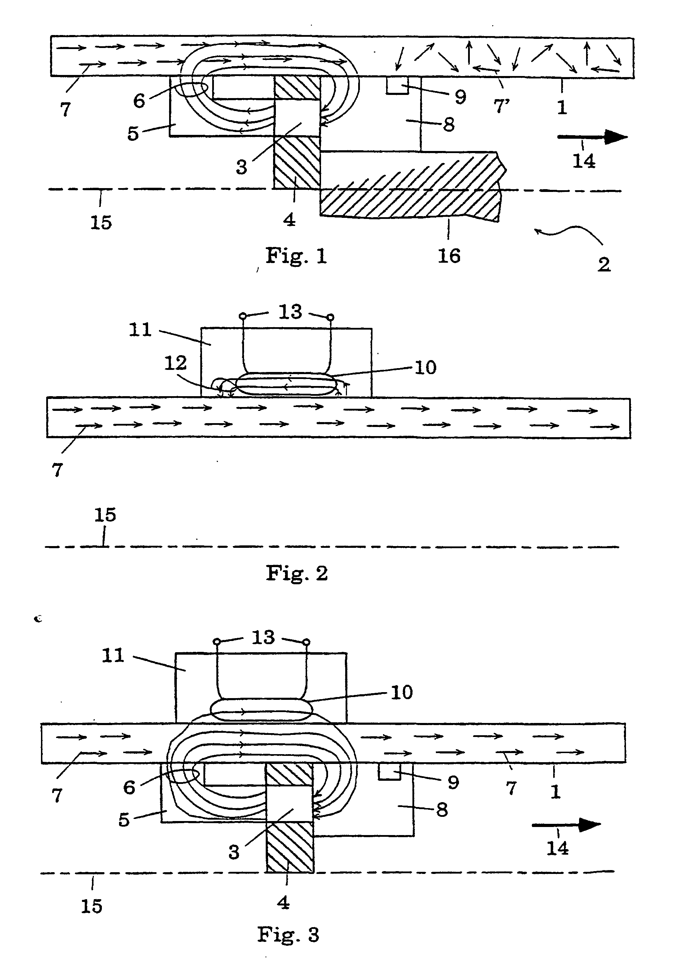

Gemäß der Figur 1 besteht eine Gehäusewand 1, die eine Zylinderwand eines Kolben-Zylindersystems sein kann, aus einem ferromagnetischen Material mehr oder weniger großer magnetischer Härte. An der Zylinderwand 1 gleitet ein Stellglied 2, wie Kolben 8 mit Kolbenstange 16, die beide aus ferromagnetischem Material bestehen, wobei innerhalb des Kolbens peripher eine Dichtung 9 angeordnet ist, die ihrerseits aus nichtmagnetischem Material besteht. Der Kolben 8 trägt eine Halterung 4, wie einen Aufnahmering, aus nichtmagnetisierbarem Werkstoff, innerhalb der ein Dauermagnet 3 in Form eines Ringmagneten oder auch eines Einzelmagneten oder mehrere Einzelmagnete angeordnet ist. Ein ferromagnetischer Polring 5 erstreckt sich vom Dauermagneten 3 zur Zylinderwand 1, wobei Stirnflächen des Polringes 5 der Zylinderwand 1 direkt gegenüberstehen zur Einleitung des magnetischen Feldes 6 in dieselbe.

Aus der Figur 1 gehen des Weiteren zwei unterschiedlich formatierte Bereiche der Zylinderwand 1 hervor. Dort, wo der Kolben 8 mit dem Dauermagneten 3 vorbeigleitet, richten sich die Elementarmagnete 7 in gerichteter Weise aus, was durch die gleichgerichteten Pfeile mit der Bezugsziffer 7 gekennzeichnet ist. In den übrigen Bereichen der Zylinderwand 1 sind die Elementarmagnete 7' noch unformatiert, was durch die beliebig in sämtliche Richtungen verlaufenden Pfeile 7' gekennzeichnet ist. Die gesamte Anordnung ist vorzugsweise rotationssymmetrisch zur Mittelaches 15, wobei sich das Stellglied 2 in Richtung des Pfeils 14 bewegt.

Zur Funktion der Vorrichtung muß das Stellglied einmal den gesamten Hub des Stellantriebes durchfahren, wodurch die gesamte Gehäusewand magnetisch formatiert wird. Dabei werden die bisher ungeordneten Elementarmagnete sämtlich in einen geordneten Zustand versetzt; man erhält ein Remanenzfeld. Der verbleibende Restmagnetismus ist entsprechend der Polung des Magnetsystems des Stellgliedes gerichtet.

Aus Figur 2 ist ersichtlich, daß ein Magnetfeldsensor 10, der sich in einem Gehäuse 11 befindet, direkt von außen auf die Zylinderwand 1 aufgesetzt wird Dieses Magnetfeldsensorelement 10 ist imstande, das sich aufgrund der Remanenz ausbildende Streufeld 12, welches aus der Oberfläche der Zylinderwand 1 austritt, direkt zu erfassen. Das Streufeld 12 ist dabei entgegengesetzt dem Remanzfeld 7 innerhalb des Zylinders gerichtet, wie es in Figur 2 gezeigt ist. Der Magnetfeldsensor 10 besitzt elektrische Anschlüsse 13 zur Abnahme des erzeugten elektrischen Sensorsignals.

Aus Figur 3 geht die Änderung des Magnetfeldes hervor beim erneuten Überfahren der Gehäusewand 1 durch das Stellglied 2 mitsamt dem Dauermagneten 3. Das Streufeld 12, welches sich innerhalb der Zylinderwand 1 gemäß der Figur 2 ausgebildet hat, wird durch das Magnetfeld 6 des Dauermagneten 3 überfahren, so daß während der Zeitspanne des Überfahrens das Streufeld 12 durch das Magnetfeld 6 des Dauermagneten 3 überlagert wird. Der Magnetfeldsensor 11 ist imstande, die Änderung des Magnetfeldes festzustellen und ein Sensorsignal abzugeben.

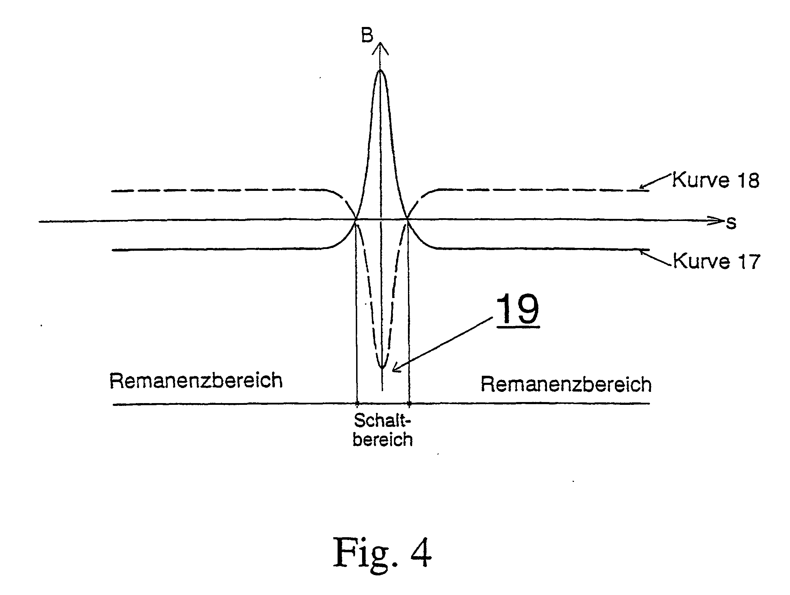

Figur 4 zeigt als Beispiel in einer schaubildlichen Darstellung den Verlauf der magnetischen Flußdichte an der Gehäuse- bzw. Zylinderwand entlang der Längsachse. Je nach Polung des Dauermagneten 3 erhält man zwei unterschiedliche Flußdichtekurven 17, 18. Innerhalb des schmalen Schaltbereichs 19 findet nun ein Schaltvorgang statt, in dem die Polarität des magnetischen Feldes innerhalb des Magnetfeldsensor 10 kurzzeitig umgekehrt wird, wobei der Magnetfeldsensor 10 die Änderung der Polarität des Feldes registriert. Die beiden Bereiche rechts und links skizzieren die Flußdichte im Remanenzfall. Befindet sich der Kolben 2 mit dem Dauermagneten 3 genau unter dem Magnetfeldsensor 10, so bewirkt die Änderung der magnetischen Flußdichte ein Ausgangssignal des Magnetfeldsensors 10 und damit das Durchschalten der Elektronik. Auf diese Weise erhält man außerhalb der Gehäusewand bzw. des Zylinders die Information über die Stellglied- bzw. die Kolbenposition.

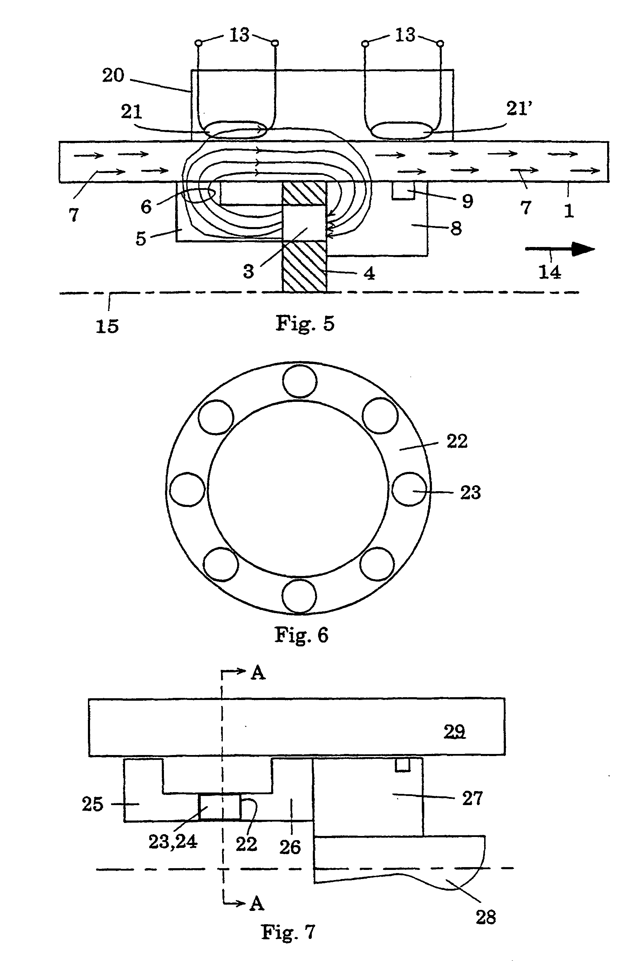

Figur 5 zeigt ein Beispiel einer Vorrichtung entsprechend der Figur 3, wobei hier der Magnetfeldsensor 20 aus zwei räumlich voneinander getrennt angeordnete Magnetfeldsensorelementen 21, 21' besteht zur differentiellen Auswertung der magnetischen Flußdichteänderung und zur Erzeugung eines Differenzsignals.

Figur 6 zeigt in Draufsicht einen Aufnahmering 22 aus nichtmagnetisierbarem Material mit einer Mehrzahl von in äquidistanten Abständen angeordneten Magneten 23. In der Figur 7 ist ein Ausschnitt aus einer Zylinderwand 29 mit einem Kolben 27 aus nichtmagnetisierbarem Material sowie mit einer Schubstange 28 gezeigt, wobei an dem Kolben 27 Polschuhe in Form von Polringen 25, 26 aus ferromagnetischem Material angeordnet sind, zwischen denen wenigstens ein Magnet 24 gehaltert ist.

Die Figur 6 kann auch einen Querschnitt in Richtung der Linie A-A durch Figur 7 darstellen, wobei dann die Figur 7 rotationssymmetrisch zu denken ist und die Polringe 25, 26 ebenfalls ringförmig umlaufen, und zwischen den Polringen 25, 26 in einer Querschnittsebene des Zylinders der Aufnahmering 22 der Figur 7 sich befindet, der eine Mehrzahl von Magnete 23, 24, vorzugsweise in äquidistanten Abständen voneinander, aufweist. Der Aufnahmering 22 ist zwischen den ferromagnetischen Polschuhen 25, 26 dergestalt angeordnet, daß die Nord- bzw. Südpole der Magnete 23, 24 den Polschuhen direkt gegenüberstehen oder diese berühren, so daß die Magnete 23, 24 das magnetische Feld direkt in die Polringe 25, 26 einspeisen.

### Gewerbliche Anwendbarkeit:

Der Gegenstand der Erfindung ist insbesondere dort gewerblich anwendbar, wo die Position eines Kolbens in Stahlzylindern eines Kolben-Zylindersystems überwacht werden muß, wie beispielsweise bei Stellantrieben in der Hydrauliktechnik. Der Gegenstand der Erfindung ersetzt beispielsweise Hallelement mit Flussleitblechen, wobei ein wesentlicher Vorteil darin besteht, daß durch die spezifische Anordnung des Sensorelements wie auch die Verbesserung der Elektronik auf die Flußleitbleche verzichtet werden kann, da der magnetische Fluß direkt das Sensorelement durchsetzt, dessen Ausgangssignal in ein entsprechendes Schaltsignal umgewandelt wird.

Liste der Bezugszeichen:
- 1,29: Gehäuse- oder Zylinderwand
- 2: Stellglied
- 3,23,24: Magnete oder Dauermagnete
- 4: Halterung
- 5,25,26: Polringe
- 6: magnetische Feldlinien
- 7,7': Elementarmagnete
- 8,27: Kolben
- 9: Dichtung
- 10,11: Magnetfeldsensor
- 12: Streufeld
- 13: elektrische Anschlüsse
- 14: Pfeilrichtung
- 15: Mittelachse
- 16: Kolbenstange
- 17,18: Flußdichtekurven
- 19: Schaltbereich
- 20: Magnetfeldsensor
- 21, 21': Magnetfeldsensorelemente
- 22: Aufnahmering
- 28: Schubstange

## Patentansprüche

1. Verfahren zur Positionserfassung eines beweglich angeordneten Stellglieds (2,27) eines Stellantriebs hinter einer aus ferromagnetischem Material bestehenden Gehäusewand (1,29), wobei das Stellglied (2,27) einen Magneten (3,23,24) trägt, der ein magnetisches Feld durch die Gehäusewand (1,29) erzeugt und vor der Gehäusewand (1,29) ein Magnetfeldsensor (10,21,21') positioniert ist,
**dadurch gekennzeichnet,**
**daß** das Stellglied (2,27) mitsamt dem Magneten (3,23,24) relativ zur Gehäusewand (1,29) bewegt wird, wodurch die Feldlinien (6) des magnetischen Feldes einen innerhalb der Gehäusewand (1,29) verlaufenden fortschreitenden Hauptfluß (6) mit magnetischer Remanenz aufbauen, die einen Streufluß zur Vorderseite der Gehäusewand (1,29) aufbaut, wobei der Streufluß außerhalb der Gehäusewand (1,29) entgegengesetzt wie der Hauptfluß gerichtet ist und der Magnetfeldsensor die Feldrichtung des Streuflusses (12) erfaßt und bei Vorbeifahrt des Stellglieds (2,27) mit dem Magneten (3,23,24) das Streufeld durch das magnetische Feld (6) des Magneten (3,23,24) überlagert wird und der Magnetfeldsensor (10,21,21') die Änderung der Polarität des magnetischen Feldes registriert und aus dem Signal des Magnetfeldsensors (10,21,21') in einer nachgeschalteten Auswerteelektronik ein Schaltsignal abgeleitet wird.

2. Zylinder mit einer ferromagnetischen Gehäusewand (1,29) und mit einem mit einer Kolbenstange (16,28) verbundenen, als Stellglied (2,27) wirkenden, beweglich angeordneten Kolben (8,27) zur Positionserfassung des Stellglieds, wobei an dem Kolben (8,27) oder der Kolbenstange (16,28) ein Magnet (3,23,24) angeordnet ist, welcher mit einem Polring (5,25,26) in Verbindung steht, welcher der Gehäusewand (1,29) gegenüberstehende Stirnflächen aufweist, wobei der Magnet (3,23,24) ein magnetisches Feld erzeugt, welches durch die Stirnflächen des Polrings (5,25,26) in die Gehäusewand (1,29) eingeleitet wird und durch diese hindurch wirkt, vor welcher ein Magnetfeldsensor (10,21,21') auf die Gehäusewand (1,29) aufgebracht ist, mit einer dem Magnetfeldsensor (10,21,21') nachgeschalteten Auswerteelektronik,
**dadurch gekennzeichnet,**
**dass** der Magnetfeldsensor ein Magnetfeldsensorelement (10,21,21') ist, wobei im Verwendungsfall bei Bewegung des Stellglieds (2,27) mitsamt dem Magnet (3,23,24) relativ zur Gehäusewand (1,29) die Feldlinien (6) des magnetischen Feldes einen innerhalb der Gehäusewand (1,29) verlaufenden fortschreitenden Hauptfluß (6) aufbauen, der in der Gehäusewand (1,29) eine magnetische Remanenz (7) ausbildet, die nach Vorbeifahrt des Magneten (3,23,24) erhalten bleibt und die entlang der Bewegungsachse des Magneten (3,23,24) entsprechend der Polung gerichtet ist und einen Streufluss (12) zur Vorderseite der Gehäusewand (1,29) nach außerhalb derselben aufbaut, in dessen Bereich das Magnetfeldsensorelement (10,21,21') angeordnet ist, wobei der Streufluss (12) außerhalb der Gehäusewand (1,29) in entgegengesetzter Richtung wie der Hauptfluss (6) gerichtet ist, und das Magnetfeldsensorelement (10,21,21') die Feldrichtung des Streuflusses (12) erfaßt und bei Vorbeifahrt des Magneten (3,23,24) das Streufeld durch das magnetische Feld (6) des Magneten (3,23,24) überlagert wird und das Magnetfeldsensorelement (10,21,21') die Änderung der Polarität des magnetischen Feldes zu registrieren imstande ist und aus dem Signal des Magnetfeldsensorelements (10,21,21') in der Auswerteelektronik ein Schaltsignal ableitbar ist.

3. Zylinder nach Anspruch 2, **dadurch gekennzeichnet,**
**daß** der Magnet ein Dauermagnet (3,23,24) ist.

4. Zylinder nach Anspruch 2 und 3, **dadurch gekennzeichnet,**
**daß** der Polring aus einem ferromagnetischen Material besteht und der Dauermagnet (3) ein Magnetring ist, der in einem Aufnahmering (4) aus einem nichtmagnetisierbaren Material angeordnet ist, wobei der Aufnahmering am Kolben befestigt ist.

5. Zylinder nach Anspruch 2, **dadurch gekennzeichnet,**
**daß** das Magnetfeldsensorelement (10,21,21') in einer Vertiefung der Gehäusewand (1,29) des Zylinders angeordnet ist.

6. Zylinder nach Anspruch 4, **dadurch gekennzeichnet,**
**daß** der Polring aus weichmagnetischem Stahl besteht und mehrere der genannten Dauermagnete (23), zum Beispiel in zylindrischer Bauform, in einem Aufnahmering (22) aus nichtmagnetisierbarem Material aufweist.

7. Zylinder nach Anspruch 4, **dadurch gekennzeichnet,**
**daß** Kolben (27) und/oder Kolbenstange (28) aus magnetisierbarem, wie ferromagnetisches Material, oder nichtmagnetisierbarem Material, wie Messing, bestehen.

8. Zylinder nach Anspruch 2, **dadurch gekennzeichnet,**
**daß** der Magnetfeldsensor (20) aus mehreren räumlich unterschiedlich angeordneten Magnetfeldsensorelementen (21,21') besteht zur differentiellen Auswertung der magnetischen Flußdichteänderung und zur Erzeugung eines Differenzsignals.

9. Zylinder nach Anspruch 6, **dadurch gekennzeichnet,**
**daß** am Kolben (27) oder der Kolbenstange Polschuhe (25,26) aus weichmagnetischem oder ferromagnetischem Material angeordnet sind, zwischen denen wenigstens ein der genannten Magnete (24) gehaltert ist.

10. Zylinder nach Anspruch 9, **dadurch gekennzeichnet,**
**daß** die Polschuhe (25,26) ringförmig umlaufen und eine Mehrzahl derartiger Magnete (23,24) zwischen diesen Polringen (25,26) in einer Querschnittsebene des Zylinders (29) angeordnet ist.

11. Zylinder nach Anspruch 10, **dadurch gekennzeichnet,**
**daß** die Magnete (23,24) in einem Aufnahmering (22) aus nichtmagnetisierbarem Material angeordnet sind und vorzugsweise äquidistante Abstände voneinander haben, wobei der Aufnahmering (22) zwischen den ferromagnetischen Polringen (25,26) dergestalt angeordnet ist, daß die Nord- bzw. Südpole der Magnete (23,24) den Polringen (25,26) direkt gegenüberstehen oder diese berühren.

12. Zylinder nach Anspruch 2, **dadurch gekennzeichnet,**
**daß** das Magnetfeldsensorelement (10,21,21') innerhalb eines Gehäuses angeordnet ist, welches auf die Gehäusewand (1,29) aufgebracht ist.

13. Zylinder nach einem der vorherigen Ansprüche, **dadurch gekennzeichnet,**
**daß** das Magnetfeldsensorelement (10,21,21') ein magnetoresistiver Sensor und/oder eine Sättigungskernsonde und/oder ein Hallelement und/oder ein GMR-Sensor und/oder eine Feldplatte ist.

## Claims

1. A process for detecting the position of a movably arranged actuator (2, 27) of an actuating drive behind a housing wall (1, 29) made of ferromagnetic material, whereby the actuator (2, 27) has a magnet (3, 23, 24) that generates a magnetic field through the housing wall (1, 29), and a magnetic field sensor (10, 21, 21') is positioned in front of the housing wall (1, 29),
**characterized in that**
the actuator (2, 27), along with the magnet (3, 23, 24), is moved relative to the housing wall (1, 29), as a result of which the field lines (6) of the magnetic field build up a progressive main flux (6) that runs inside the housing wall (1, 29) with residual magnetism that builds up a stray flux towards the front of the housing wall (1, 29), whereby the stray flux outside of the housing wall (1, 29) is oriented opposite to the main flux and the magnetic field sensor detects the field direction of the stray flux (12) and, when the magnet (3, 23, 24) passes the actuator (2, 27), the stray field is superimposed by the magnetic field (6) of the magnet (3, 23, 24) and the magnetic field sensor (10, 21, 21') registers the change in the polarity of the magnetic field and a switching signal is derived from the signal of the magnetic field sensor (10, 21, 21') in an electronic evaluation system located downstream.

2. A cylinder with a ferromagnetic housing wall (1, 29) and with a movably arranged piston (8, 27) that is connected to a piston rod (16, 28) that functions as an actuator (2, 27), for detecting the position of the actuator, whereby, on the piston (8, 27) or on the piston rod (16, 28), there is a magnet (3, 23, 24) that is connected to a pole ring (5, 25, 26) having faces opposite from the housing wall (1, 29), whereby the magnet (3, 23, 24) generates a magnetic field that is fed through the faces of the pole ring (5, 25, 26) into the housing wall (1, 29) and acts right through the latter, in front of which a magnetic field sensor (10, 21, 21') is attached to the housing wall (1, 29), with an electronic evaluation system located downstream from the magnetic field sensor (10, 21, 21'),
**characterized in that**
the magnetic field sensor is a magnetic field sensor element (10, 21, 21'), whereby, when it is used with movement of the actuator (2, 27) together with the magnet (3, 23, 24) relative to the housing wall (1, 29), the field lines (6) of the magnetic field build up a progressive main flux (6) that runs inside the housing wall (1, 29) and that forms a residual magnetism (7) in the housing wall (1, 29) that is retained after the magnet (3, 23, 24) has passed and that is oriented along the axis of movement of the magnet (3, 23, 24) corresponding to the polarity, and builds up a stray flux (12) towards the front of the housing wall (1, 29) towards the outside thereof, in the area where the magnetic field sensor element (10, 21, 21') is situated, whereby the stray flux (12) outside of the housing wall (1, 29) is oriented in the opposite direction from the main flux (6), and the magnetic field sensor element (10, 21, 21') detects the field direction of the stray flux (12) and, when the magnet (3, 23, 24) passes, the stray field is superimposed by the magnetic field (6) of the magnet (3, 23, 24) and the magnetic field sensor element (10, 21, 21') is capable of registering the change in the polarity of the magnetic field and a switching signal can be derived from the signal of the magnetic field sensor element (10, 21, 21') in the electronic evaluation system.

3. The cylinder according to Claim 2, **characterized in that**
the magnet is a permanent magnet (3, 23, 24).

4. The cylinder according to Claims 2 and 3, **characterized in that**
the pole ring is made of a ferromagnetic material and the permanent magnet (3) is a magnetic ring that is arranged in a receiving ring (4) made of a non-magnetizable material, whereby the receiving ring is attached to the piston.

5. The cylinder according to Claim 2, **characterized in that**
the magnetic field sensor element (10, 21, 21') is situated in an indentation in the housing wall (1, 29) of the cylinder.

6. The cylinder according to Claim 4, **characterized in that**
the pole ring is made of magnetically soft steel and has a plurality of the above-mentioned permanent magnets (23), for example, in a cylindrical configuration, in a receiving ring (22) made of non-magnetizable material.

7. The cylinder according to Claim 4, **characterized in that**
the piston (27) and/or the piston rod (28) are made of magnetizable, for instance, ferromagnetic, material, or of non-magnetizable material, such as brass.

8. The cylinder according to Claim 2, **characterized in that**
the magnetic field sensor (20) consists of several magnetic field sensor elements (21, 21') arranged at different spatial positions for the differential evaluation of the magnetic flux density change and for the generation of a differential signal.

9. The cylinder according to Claim 6, **characterized in that**,
on the piston (27) or on the piston rod, there are pole shoes (25, 26) made of magnetically soft or ferromagnetic material, between which at least one of the above-mentioned magnets (24) is held.

10. The cylinder according to Claim 9, **characterized in that**
the pole shoes (25, 26) run in a circle and several such magnets (23, 24) are arranged between these pole rings (25, 26) in a cross sectional plane of the cylinder (29).

11. The cylinder according to Claim 10, **characterized in that**
the magnets (23, 24) are arranged in a receiving ring (22) made of a non-magnetizable material and are preferably equidistant from each other, whereby the receiving ring (22) is arranged between the ferromagnetic pole rings (25, 26) in such a way that the north pole or the south pole of the magnets (23, 24) are directly opposite from or touch the pole rings (25, 26).

12. The cylinder according to Claim 2, **characterized in that**
the magnetic field sensor element (10, 21, 21') is arranged inside a housing that is mounted onto the housing wall (1, 29).

13. The cylinder according to one of the preceding claims, **characterized in that**
the magnetic field sensor element (10, 21, 21') is a magneto-resistive sensor and/or a saturation core probe and/or a Hall element and/or a GMR sensor and/or a field plate.

## Revendications

1. Procédé permettant de détecter la position d'un organe de réglage mobile (2, 27) d'un vérin derrière une paroi de boîtier (1, 29), consistant en un matériau ferromagnétique, l'organe de réglage (2, 27) portant un aimant (3, 23, 24) qui produit un champ magnétique à travers la paroi de boîtier (1, 29) et un capteur de champ magnétique (10, 21, 21') étant positionné devant la paroi de boîtier (1, 29),
**caractérisé en ce que**
l'organe de réglage (2, 27) effectue conjointement avec l'aimant (3, 23, 24) un mouvement relatif par rapport à la paroi de boîtier (1, 29), ce par quoi les lignes de champ (6) du champ magnétique créent un flux principal (6) qui parcourt l'intérieur de la paroi de boîtier (1, 29) en avançant, avec une rémanence magnétique qui crée un flux de dispersion vers l'avant de la paroi de boîtier (1, 29), le flux de dispersion à l'extérieur de la paroi de boîtier (1, 29) étant dirigé dans une direction opposée à la direction du flux principal et le capteur de champ magnétique captant la direction de champ du flux de dispersion (12), et pendant le passage de l'organe de réglage (2, 27) avec l'aimant (3, 23, 24), le champ de dispersion est superposé par le champ magnétique (6) de l'aimant (3, 23, 24), et le capteur de champ magnétique (10, 21, 21') enregistre le changement de la polarité du champ magnétique, et à partir du signal du capteur de champ magnétique (10, 21, 21') est déduit un signal de commutation dans une électronique d'analyse connectée en aval.

2. Cylindre avec une paroi de boîtier ferromagnétique (1, 29) et avec un piston (8, 27) mobile relié à une tige de piston (16, 28) et agissant comme organe de réglage (2, 27) servant à la détection de la position de l'organe de réglage, un aimant (3, 23, 24) étant disposé sur le piston (8, 27) ou sur la tige de piston (16, 28), lequel aimant est en liaison avec un anneau polaire (5, 25, 26) qui présente des surfaces frontales qui font face à la paroi de boîtier (1, 29), l'aimant (3, 23, 24) produisant un champ magnétique qui est induit par les surfaces frontales de l'anneau polaire (5, 25, 26) dans la paroi de boîtier (1, 29) et agit au travers de celle-ci devant laquelle est placé un capteur de champ magnétique (10, 21, 21') sur la paroi de boîtier (1, 29), avec une électronique d'analyse connectée en aval du capteur de champ magnétique (10, 21, 21'),
**caractérisé en ce que**
le capteur de champ magnétique est un élément capteur de champ magnétique (10, 21, 21'), les lignes de champ (6) du champ magnétique créant, pendant que l'organe de réglage (2, 27) avec l'aimant (3, 23, 24) effectue un mouvement relatif par rapport à la paroi de boîtier (1, 29), un flux principal (6) qui parcourt l'intérieur de la paroi de boîtier (1, 29) en avançant et crée dans la paroi de boîtier (1, 29) une rémanence magnétique (7) qui demeure après le passage de l'aimant (3, 23, 24) et est dirigée le long de l'axe de la course de l'aimant (3, 23, 24) conformément à la polarité et crée un flux de dispersion (12) vers l'avant de la paroi de boîtier (1, 29) à l'extérieur de celle-ci, dans la zone duquel l'élément capteur de champ magnétique (10, 21, 21') est disposé, le flux de dispersion (12) étant dirigé à l'extérieur de la paroi de boîtier (1, 29) dans la direction opposée à celle du flux principal (6), et l'élément capteur de champ magnétique (10, 21, 21') détecte la direction de champ du flux de dispersion (12) et pendant la course de l'aimant (3, 23, 24), le champ de dispersion est superposé par le champ magnétique (6) de l'aimant (3,23,24) et l'élément capteur de champ magnétique (10, 21, 21') est en mesure d'enregistrer le changement de la polarité du champ magnétique et un signal de commutation peut être déduit du signal de l'élément capteur de champ magnétique (10, 21, 21') dans l'électronique d'analyse.

3. Cylindre selon la revendication 2, **caractérisé en ce que**
l'aimant est un aimant permanent (3, 23, 24).

4. Cylindre selon les revendications 2 et 3, **caractérisé en ce que**
l'anneau polaire consiste en un matériau ferromagnétique et l'aimant permanent (3) est un anneau magnétique qui est disposé dans un anneau de réception (4) en un matériau non magnétisable, l'anneau de réception étant fixé au piston.

5. Cylindre selon la revendication 2, **caractérisé en ce que**
l'élément capteur de champ magnétique (10, 21, 21') est disposé dans un creux de la paroi de boîtier (1, 29) du cylindre.

6. Cylindre selon la revendication 4, **caractérisé en ce que**
l'anneau polaire consiste en un acier magnétique doux et présente plusieurs desdits aimants permanents (23), par exemple de forme cylindrique, dans un anneau de réception (22) en un matériau non magnétisable.

7. Cylindre selon la revendication 4, **caractérisé en ce que**
le piston (27) et/ou la tige de piston (28) consistent en un matériau magnétisable tel qu'un matériau ferromagnétique, ou en un matériau non magnétisable tel que du laiton.

8. Cylindre selon la revendication 2, **caractérisé en ce que**
le capteur de champ magnétique (20) consiste en plusieurs éléments capteurs de champ magnétique (21, 21') disposés différemment dans l'espace, permettant l'analyse différentielle de la modification de la densité de flux magnétique et la génération d'un signal de différence.

9. Cylindre selon la revendication 6, **caractérisé en ce que**
sur le piston (27) ou sur la tige de piston sont disposés des pièces polaires (25, 26) en un matériau magnétique doux ou ferromagnétique, entre lesquelles est maintenu au moins un desdits aimants (24).

10. Cylindre selon la revendication 9, **caractérisé en ce que**
les pièces polaires (25, 26) sont de forme annulaire et qu'une pluralité de tels aimants (23, 24) sont disposés entre ces anneaux polaires (25, 26) sur un plan de la section transversale du cylindre (29).

11. Cylindre selon la revendication 10, **caractérisé en ce que**
les aimants (23, 24) sont disposés dans un anneau de réception (22) en un matériau non magnétisable et ont de préférence entre eux des écarts équidistants, l'anneau de réception (22) étant disposé entre les anneaux polaires ferromagnétiques (25, 26) de sorte que les pôles nord ou les pôles sud des aimants (23, 24) font directement face aux anneaux polaires (25, 26) ou les touchent.

12. Cylindre selon la revendication 2, **caractérisé en ce que**
l'élément capteur de champ magnétique (10, 21, 21') est disposé à l'intérieur d'un boîtier qui est placé sur la paroi de boîtier (1, 29).

13. Cylindre selon l'une quelconque des revendications précédentes, **caractérisé en ce que**
l'élément capteur de champ magnétique (10, 21, 21') est un capteur magnétorésistif et/ou une sonde à saturation et/ou un capteur à effet de Hall et/ou un capteur GMR et ou une magnétorésistance.
